# EUROPEAN PATENT SPECIFICATION

(11) **EP 2 080 149 B1**
(45) Date of publication and mention of the grant of the patent: **28.06.2017**
(21) Application number: 06783926.6
(22) Date of filing: 15.09.2006
(51) Int. Cl.: G06K 7/00

(54) **SYSTEM FOR COMMUNICATING WITH A RESPONDER**
SYSTEM ZUM KOMMUNIZIEREN MIT EINEM RESPONDER
SYSTÈME PERMETTANT DE COMMUNIQUER AVEC UN RÉPONDEUR

(43) Date of publication of application: 22.07.2009
(73) Proprietor: N.V. Nederlandsche Apparatenfabriek NEDAP, 7141 DC Groenlo (NL)
(72) Inventor: STEKELENBURG, Jan Cornelis, 7101 CJ Winterswijk (NL)
(74) Representative: V.O.
(86) International application number: PCT/NL2006/000461
(87) International publication number: WO 2008/033006

(56) References cited:
- EP-A- 0 722 155
- EP-A- 1 610 257

## Description

The invention relates to a system according to the preamble of claim 1. The invention also relates to a method according to the preamble of claim 29.

Such a system and method are known from EP-A-0 722 155. The known systems have the drawback that they are sensitive to mistuning of the antenna system, for instance due to environmental factors, such as an electric capacity of a construction, for instance a wall, on which the antenna system is placed. The mistuning reduces the efficiency of the system, so that a maximum distance over which the system can communicate with the responder decreases. In order to maximize the distance over which the system can communicate with the responder, with the known systems, it is therefore necessary to tune the system to the location where it is installed during installation. This involves extra work, and associated extra risks that the system is not optimally tuned.

It is an object of the invention to improve the system for communicating with the at least one responder.

To this end, according to the invention, the system is characterized by the characterizing portion of claim 1. imaginary component. Here, an output impedance at the output of the amplifier, at least at the predetermined transmission frequency, is so high with respect to the impedance of the antenna system that a quality Q and a mistuning of the antenna system with respect to the transmitter are substantially of no importance. In addition, the efficiency of the transmitter is high when the antenna system is arranged such that the impedance of the antenna system, at least at the predetermined transmission frequency, is substantially free of an imaginary component, since, in that case, the impedance of the antenna system is minimal.

Preferably, the system is further provided with a receiver for receiving a second signal from the at least one responder. This offers the advantage that bidirectional communication between the at least one responder and the system is possible.

Preferably, the antenna system is connected with the receiver. This enables a compact design of the system. In addition, it is thus not necessary to use separate transmitting and receiving antennas. In addition, this offers the advantage that an output impedance at the output of the amplifier, at least at the predetermined transmission frequency, is so high that an output voltage of the antenna system upon receiving the second signal from the responder is not, at least hardly influenced by the output impedance of the output of the amplifier connected with the antenna system. This is reinforced in that the impedance of the antenna system, at least at the predetermined transmission frequency, is substantially free of the imaginary component. A quality Q and a mistuning of the antenna system with respect to the receiver are substantially of no importance therein.

In a first embodiment, the system is arranged for transmitting and/or receiving full duplex (FDX) signals.

In a second embodiment, the system is arranged for alternately transmitting or receiving half duplex (HDX) signals.

Preferably, the system is provided with damping means which can be switched on and off for damping currents through the antenna system, while the system is arranged for switching on the damping means during a period in which the transmitter does not transmit the first signal and in which the receiver receives the second signal and the system is arranged for switching off the damping means during a period in which the transmitter transmits the first signal and in which the receiver does not receive the second signal. As a result, during the period in which the receiver receives the second signal, the quality Q of the antenna system connected with the transmitter is lower than during a period in which the transmitter transmits the first signal. This offers the advantage that, during the period that the transmitter transmits the first signal, the efficiency of the transmitter is high and that, during the period that the receiver receives the second signal, the receiver has a large bandwidth. As a result, the system can communicate with the at least one responder over a distance which is larger than with the system which is not provided with damping means which can be switched on and off.

Preferably, the system is arranged for switching on the damping means during a period that the transmitter does not transmit the first signal and before the receiver receives the second signal. This offers the advantage that built-up solar energy can be removed from the antenna before the receiver receives the second signal.

Preferably, the antenna system is provided with an LC circuit which is arranged such that the impedance of the antenna system, at least at the predetermined transmission frequency, is substantially free of the imaginary component. Preferably, the LC circuit is provided with an antenna which forms an induction of the LC circuit. Preferably, the LC circuit comprises a series capacitor which is connected in series with the antenna, and where, at least at the predetermined transmission frequency, an imaginary component of an impedance of the series capacitor is substantially equal to, and has an opposite sign compared to, an imaginary component of an impedance of the antenna. This offers the advantage that the antenna system is provided with a simple structure, where the impedance of the antenna system, at least at the predetermined transmission frequency, is substantially free of the imaginary component.
Preferably, the series capacitor is inserted between the antenna and the output of the amplifier. Preferably, the value of the series capacitor is chosen such that, in use, the emission of signals with a frequency in the range of 0-1000 Hz is prevented, at least reduced, by the antenna. This offers the advantage that, by the antenna system, no, at least fewer high-energy pulses can be formed in the frequency range of 0-1000 Hz, which pulses may, for instance, affect pacemakers. This increases the safety of the system.

In one embodiment, the amplifier is provided with an amplifier stage which, at least at the predetermined transmission frequency, behaves as a voltage source and with a voltage-to-current conversion circuit. This offers the advantage that the amplifiers and/or amplifier stages conventional for this use, which behave as a voltage source at the output, can be used.

In one embodiment, the system is further provided with a transformer, the transformer being inserted between the antenna system and the output of the amplifier. This offers the advantage that the system is more flexible with respect to choice of antenna than the system where the transformer is not inserted between the antenna system and the output of the amplifier.

The method according to the invention is characterized by the characterizing portion of claim 29.

EP-A-1610 257 discloses a reader for a transponder. However the reader is not provided with an output which behaves like a current source.

In the following, the invention is, by way of example, explained in more detail with reference to the drawing, in which:
Fig. 1 shows a schematic representation of a first embodiment of a system according to the invention;
Fig. 2 shows a schematic representation of a second embodiment of a system according to the invention;
Fig. 3 shows a schematic representation of a third embodiment of a system according to the invention;
Fig. 4 shows a schematic representation of a fourth embodiment of a system according to the invention; and
Fig. 5 shows a schematic representation of a fifth embodiment of a system according to the invention.

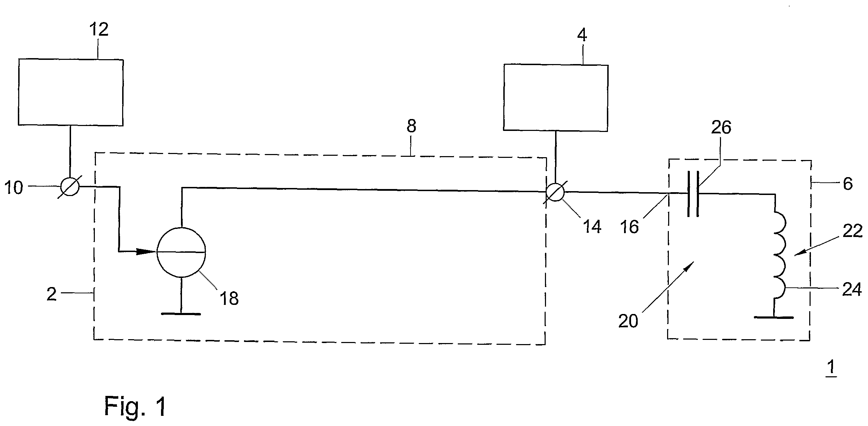

Fig. 1 shows a schematic representation of a first embodiment of system 1 according to the invention for communicating with at least one responder. The system 1 is provided with a transmitter 2, a receiver 4 and an antenna system 6. The antenna system 6 is connected with the transmitter 2 and with the receiver 4. The transmitter 2 is provided with an amplifier 8. The amplifier 8 is provided with an input 10 which is arranged for being connected with a signal source 12 is provided and with an output 14 which is connected with an antenna connection 16 of the antenna system 6. As shown in Fig. 1, an amplifier stage of the amplifier 8 is designed as a current source 18.

The system shown in Fig. 1 is used as follows. In use, to the input 10 of the amplifier 8 of the transmitter 2, a signal source output signal from the signal source 12 is supplied. The signal source output signal is, for instance, a sinusoidal signal with a predetermined frequency, more in particular a sinusoidal signal composed of at least one digital signal. The signal source output signal is amplified, and optionally processed, by the amplifier 8 to an amplifier output signal and supplied to the output 14 of the amplifier 8. The output 14 of the amplifier 8 is connected with the antenna system 6, so that the antenna system 6 will transmit a first signal with a predetermined transmission frequency, which first signal corresponds with the amplifier output signal. In use, the first signal can be received by a responder. In response to receiving the first signal, the responder will transmit a second signal. The second signal is received by the antenna system 6 and causes an antenna output signal corresponding with the received second signal at the antenna connection 16 of the antenna system 6. The receiver 4 is connected with the antenna connection 16 and receives the antenna output signal corresponding with the second signal. It therefore holds that the receiver 4 receives the second signal.

The output 14 of the amplifier 8 behaves like the current source 18. As a result, an output impedance at the output 14 of the amplifier 8 is so high that, upon receiving the second signal from the responder, an electrical voltage of the antenna output signal at the antenna connection 16 of the antenna system 6 is not, at least hardly, influenced by the output impedance of the output 14 of the amplifier 8 connected with the antenna connection 16 of the antenna system 6. Therefore, the receiver 4 can efficiently and accurately receive the antenna output signal. The receiver 4 may, for instance, be designed as an amplitude modulation (AM) receiver or as a frequency shift keyed (FSK) receiver.

In Fig. 1, the antenna system 6 is provided with an LC circuit 20 which is arranged such that the impedance of the antenna system 6, at least at the predetermined transmission frequency, is substantially free of an imaginary component. In the example of Fig. 1, the antenna system 6 is provided with an antenna 22, for instance a coil or winding, with the antenna 22 forming an induction 24 of the LC circuit 20. In this example, the LC circuit 20 comprises a series capacitor 26 which is connected in series with the antenna 22. In Fig. 1, the series capacitor 26 is inserted between the antenna 22 and the output 14 of the amplifier 8. An imaginary component of an impedance of the series capacitor 26, at least at the predetermined transmission frequency, is substantially equal to, and has an opposite sign compared to, an imaginary component of an impedance of the antenna 22, in this example an imaginary component of an impedance of the induction 24. The imaginary component of the impedance of the series capacitor 26 compensates for the imaginary component of the impedance of the antenna 22. The impedance of the antenna system 6 is therefore, at least at the predetermined transmission frequency, substantially free of the imaginary component.

The output impedance at the output 14 of the amplifier 8 is high with respect to the impedance of the antenna system 6. Therefore, a mistuning of the antenna system 6 (i.e. a difference in resonance frequency of the antenna system 6 with respect to the transmission frequency, for instance as a result of environmental factors, such as an electrical capacity of a construction, for instance a wall, on which the antenna system 6 is placed) has no or little influence on the efficiency with which the transmitter 2 can transmit the first signal via the antenna system 6, at least less than when the antenna system were connected with the output of an amplifier which behaves like a voltage source, for instance a class D amplifier known per se. As a result, the system 1 is tolerant to mistuning, which simplifies installation of the system 1.

Since the impedance of the antenna system 6, at least at the predetermined transmission frequency, is substantially free of the imaginary component, the impedance of the antenna system 6 is, at least around the predetermined transmission frequency, lower than when the impedance were not substantially free of the imaginary component. As a result, the efficiency with which the transmitter 2 can transmit the first signal via the antenna system 6 is higher than when the impedance of the antenna system 6 were not substantially free of the imaginary component around the predetermined transmission frequency. The efficiency of the transmitter 2 together with the antenna system 6 is therefore higher, and a maximum distance over which the system can communicate with the responder is larger than when the impedance of the antenna system 6 were not substantially free of the imaginary component.

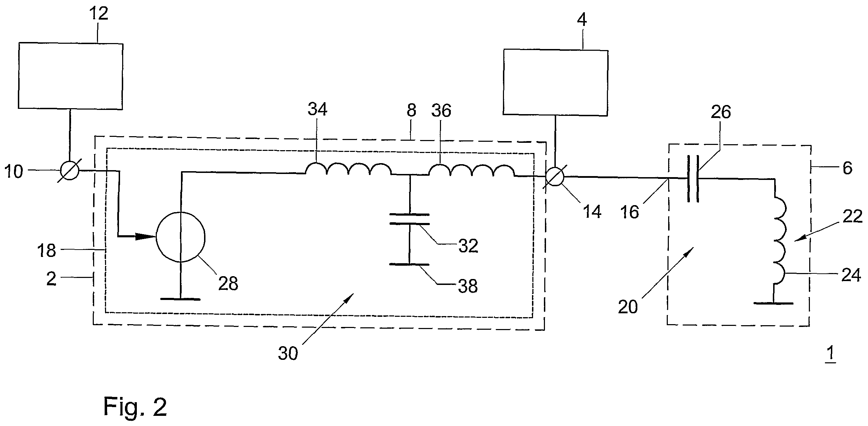

Fig. 2 shows a schematic representation of a second embodiment of a system 1 according to the invention. In the example of Fig. 2, the amplifier 8 comprises an amplifier stage 28 which behaves like a voltage source. The amplifier 8 is further provided with a voltage-to-current conversion circuit 30 which is arranged such that, at least at the predetermined transmission frequency, the output 14 of the amplifier 8 behaves like the current source 18. In use, to the input 10 of the amplifier 8 of the transmitter 2, the signal source output signal from the signal source 12 is supplied.

In the example of Fig. 2, the voltage-to-current conversion circuit 30 comprises a capacitor 32 and two inductions 34, 36. A first end of the first induction 34, a first end of the second induction 36 and a first end of the capacitor 32 are interconnected. A second end of the first induction 34 is connected with the voltage source 28. A second end of the second induction 36 is connected with the output 14 of the amplifier 8. A second end of the capacitor 32 is connected with a reference voltage such as mass 38. The capacitor 32 and the inductions 34, 36 are dimensioned such that the voltage-to-current conversion circuit 30, at least at the transmission frequency, behaves like the current source 18 at the output 14.

The voltage-to-current conversion circuit 30 shown in Fig. 2 also behaves like a filter, for instance a low-pass filter for stopping harmonics of the signal source output signal. However, it is also possible for the amplifier to comprise an additional filter. The signal source output signal is, for instance, a sinusoidal signal with a predetermined frequency, more in particular a sinusoidal signal composed of at least one digital signal. The signal source output signal comprises, for instance, a sinusoidal signal composed of at least one digital signal which is composed such that a number of overtones are not present in the signal source output signal, for instance such that the second to sixth harmonics are not present in the signal source output signal. It is possible to choose the signal source output signal and the voltage-to-current conversion circuit 30 such that the amplifier output signal substantially exclusively consists of the fundamental of the signal source output signal.

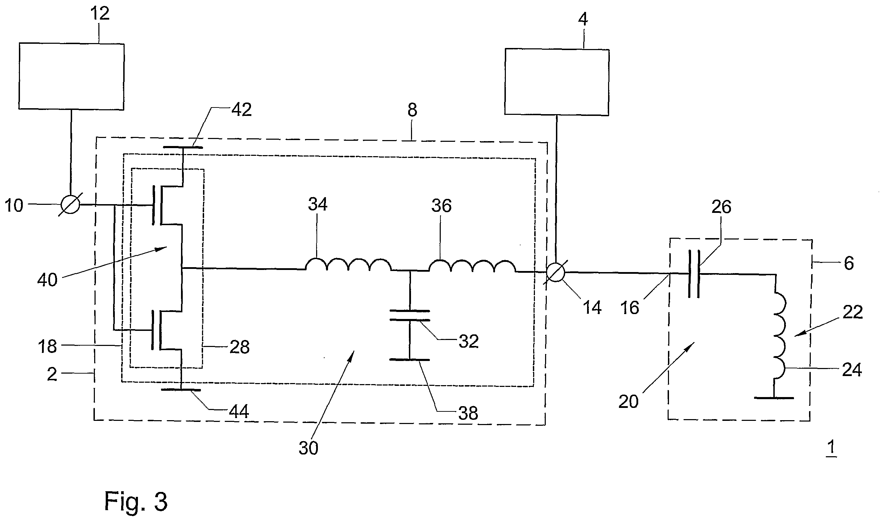

Fig. 3 shows a schematic representation of a third embodiment of the system 1 according to the invention. In the example of Fig. 3, amplifier 8 comprises a class D amplifier 40, which is arranged such that switching takes place between a positive supply voltage 42 and a negative supply voltage 44. An output of the class D amplifier 40 is low-Ohm, so that the class D amplifier 40 behaves like the voltage source. The output of the class D amplifier 40 is, in this example, connected with the voltage-to-current conversion circuit 30, so that the amplifier 8 behaves like the current source 18 at the output 14, at least at the predetermined transmission frequency.

The system 1 as shown in Figs. 1-3 may, for instance, be used as a full duplex (FDX) system, where the first signal can be transmitted and the second signal can be received simultaneously, and as a half duplex (HDX) system, where the first signal is transmitted and the second signal is received substantially alternately.

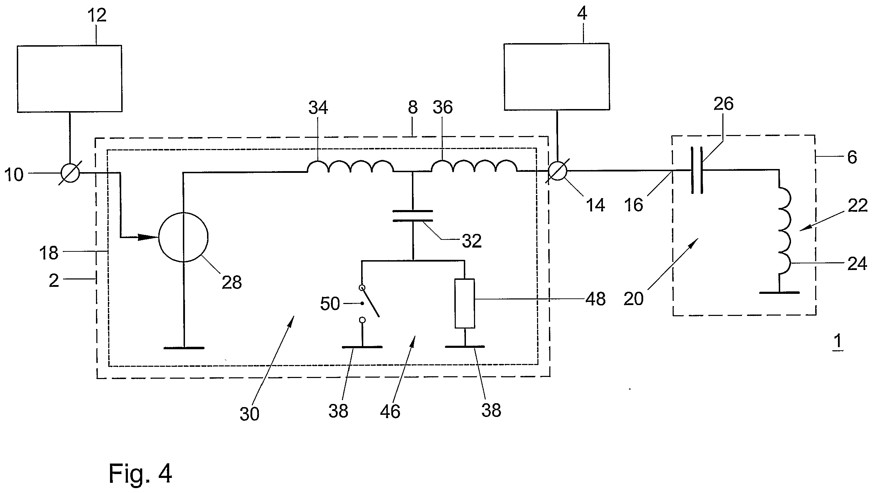

Fig. 4 shows a schematic representation of a fourth embodiment of a system according to the invention which is particularly suitable for use as a HDX system. The system in Fig. 4 is provided with damping means 46 which can be switched on and off for damping currents through the antenna system 6. Preferably, the damping means 46 are switched off during a first period in which the transmitter 2 transmits the first signal and in which the receiver 4 does not receive the second signal. The damping means 46 are preferably switched on during a second period in which the receiver 4 receives the second signal and the transmitter 2 does not transmit the first signal.

During the second period, the damping means 46 damp the currents through the antenna system, so that the quality Q of the antenna system 6 is lower than when the damping means 46 are switched off. As a result, the antenna system 6 can receive a signal which is more broadband than when the damping means 46 are switched off. This offers the advantage that an efficiency with which the antenna system 6 receives the second signal and supplies it to the receiver 4 is substantially independent of mistuning of the antenna system with respect to the second signal. The quality Q and/or the impedance of the antenna system 6 have substantially no influence on the efficiency with which the receiver 4 receives the second signal.

During the first period, the damping means 46 are switched off, so that the impedance of the transmitter 2 is higher than when the damping means 46 are switched on. As a result, during the first period, the efficiency with which the transmitter 2 can transmit the first signal via the antenna system 6 is higher than when the damping means 46 are switched on.

In Fig. 4, the damping means 46 comprise a damping resistance 48. In this example, the damping resistance 48 is inserted between the capacitor 32 and mass 38. The damping means 46 which can be switched on and off are, in this example, also provided with a switch 50 for switching the damping means 46 on and/or off, in this example by short-circuiting or not short-circuiting the damping resistance 48.

The damping means 46 may also be switched on in a period that the transmitter 2 does not transmit the first signal, and before the receiver 4 receives the second signal. This offers the possibility that transmission energy present in the antenna system 6 flows away via the damping means 46, in this example via the damping resistance 48, so that the second signal can be detected after the transmission energy present has, at least partly, been reduced.

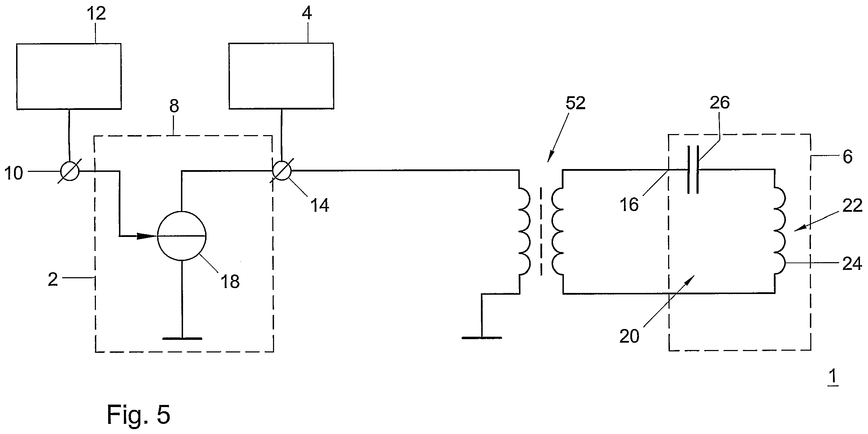

Fig. 5 shows a schematic representation of a fifth embodiment of the system 1 according to the invention. In Fig. 5, the system is provided with a transformer 52 which is inserted between the antenna system 6 and the output 14 of the amplifier 8 of the transmitter 2. A winding ratio between a primary and a secondary winding of the transformer 52 determines the current through the antenna system 6. This offers the advantage that more design freedom is obtained with respect to the antenna systems to be used.

It is also possible to use the transformer 52 in the system 1 as shown in Figs. 2 and 3. Since not the antenna 22, but the antenna system 6, whose impedance is substantially free of the imaginary component, is damped by the damping means in Fig. 4, it is also possible to use the transformer 52 in the system as shown in Fig. 4. Using the transformer 52 for instance allows the transmitter 2 to be arranged for supplying 1A of output current to the output 14, while an antenna system 6 as desired, for instance a single-turn antenna, is coupled with the transmitter 2 via the transformer 52.

In the examples, the effect of the series capacitor 26 is that no direct current can be fed through the antenna system 6. A value of the series capacitor 26 can be chosen such that, in use, emission of signals with a frequency in the range of 0-1000Hz is prevented, at least reduced, by the antenna system. This increases the safety of the system since the frequencies in the range of 0-1000Hz may, for instance, affect pacemakers.

If desired, the impedance of the antenna system 6 can simply be adapted to, for instance, environmental factors, by choosing a different value for the series capacitor 26, for instance by means of a variable capacitor. This may be convenient when a large mistuning is present. The tuning of the antenna system 6 may take place according to the following method. During the transmission of the first signal, the value of the series capacitor 26 is varied, while an output voltage at the output 14 of the amplifier is measured. That value of the series capacitor 26 is selected at which the output voltage has the lowest value measured, and at which thus the efficiency of the system 1 is optimal. This is because, at this value, the impedance of the antenna system 6 is the lowest, and therefore substantially free of the imaginary component. It will be clear that adjusting the impedance of the antenna system 6 may be carried out manually, but also automatically, for instance by suitable electronic circuit, optionally provided with a microprocessor. In addition, if the antenna system 6 is tuned, it also holds that the system 1 is tolerant to mistuning, so that the risk that the system 1 is not tuned optimally is limited.

The system according to the invention may for instance, but not exclusively, be used for detecting goods, shoplifting security, identification of persons and/or identification of animals such as for instance cows.

## Claims

1. A system (1) for communicating with at least one responder, wherein the system (1) is provided with a transmitter (2) for transmitting at least a first signal with a predetermined transmission frequency and an antenna system (6), wherein the antenna system (6) is connected with the transmitter (2),
wherein the transmitter (2) is provided with an amplifier (8) provided with an input (10) which is arranged for being connected with a signal source (12) and provided with an output (14) which is connected with the antenna system (6),
wherein the amplifier (8) is arranged such that, at least at the predetermined transmission frequency, the output (14) behaves like a current source (18), **characterized in that** the antenna system (6) is arranged such that an impedance of the antenna system (6), at least at the predetermined transmission frequency, is substantially free of an imaginary component.

2. A system according to claim 1, wherein the system (1) is further provided with a receiver (4) for receiving a second signal from the at least one responder.

3. A system according to claim 2, wherein the antenna system (6) is connected with the receiver (4).

4. A system according to any one of claims 2-3, wherein the system (1) is arranged for transmitting and/or receiving full duplex (FDX) signals.

5. A system according to any one of claims 2-4, wherein the system (1) is arranged for alternately transmitting or receiving half duplex (HDX) signals.

6. A system according to any one of claims 2-5, wherein the receiver (4) comprises an amplitude modulation (AM) receiver.

7. A system according to any one of claims 2-6, wherein the receiver (4) comprises a frequency shift keyed (FSK) receiver.

8. A system according to claim 5, wherein the system (1) is provided with damping means (46) which can be switched on and off for damping currents through the antenna system (6).

9. A system according to claim 8, wherein the system (1) is arranged for switching on the damping means (46) during a period in which the transmitter (2) does not transmit the first signal and in which the receiver (4) receives the second signal.

10. A system according to claim 8 or 9, wherein the system (1) is arranged for switching off the damping means (46) during a period in which the transmitter (2) transmits the first signal and in which the receiver (4) does not receive the second signal.

11. A system according to claim 10, wherein the system (1) is arranged for switching on the damping means (46) during a period that the transmitter (2) does not transmit the first signal and before the receiver (4) receives the second signal.

12. A system according to any one of claims 9-11, wherein the damping means (46) comprise a damping resistance (48), which damping resistance (48) is connected with a reference voltage, such as mass (38).

13. A system according to any one of the preceding claims, wherein the antenna system (6) is provided with an LC circuit (20) which is arranged such that the impedance of the antenna system (6), at least at the predetermined transmission frequency, is substantially free of the imaginary component.

14. A system according to claim 13, wherein the LC circuit (20) is provided with an antenna (22) which forms an induction (24) of the LC circuit (20).

15. A system according to claim 13 or 14, wherein the LC circuit (20) comprises a series capacitor (26) which is connected in series with the antenna (22), and wherein, at least at the predetermined transmission frequency, an imaginary component of an impedance of the series capacitor (26) is substantially equal to, and has an opposite sign to, an imaginary component of an impedance of the antenna (22).

16. A system according to claim 15, wherein the series capacitor (26) is inserted between the antenna (22) and the output (14) of the amplifier (8).

17. A system according to any one of claims 15 or 16, wherein the value of the series capacitor (26) is chosen such that, in use, the emission of signals with a frequency in the range of 0-1000Hz is prevented, at least reduced, by the antenna (22).

18. A system according to any one of the preceding claims, wherein the system (1) is further provided with the signal source (12), which generates a signal source output signal which is supplied to the input (10) of the amplifier (8), wherein the amplifier (8) is arranged such that an amplifier output signal of the amplifier (8) substantially exclusively comprises a fundamental of the signal source output signal.

19. A system according to claim 18, wherein the signal source output signal comprises a sinusoidal signal composed of at least one digital signal.

20. A system according to claim 18 or 19, wherein the amplifier (8) is provided with a passive low-pass filter (30).

21. A system according to any one of claims 18-20, wherein, in use, the amplifier output signal is free of the second to sixth harmonics of the signal source output signal.

22. A system according to any one of claims 18-21, wherein, in use, the signal source output signal is free of the second to sixth harmonics of the fundamental.

23. A system according to any one of the preceding claims, wherein the amplifier (8) is provided with an amplifier stage (28) which behaves, at least at the predetermined transmission frequency, like a voltage source and with a voltage-to-current conversion circuit (30).

24. A system according to claim 23, wherein the amplifier (8) comprises a class D amplifier (40).

25. A system according to claim 23 or 24, wherein the voltage-to-current conversion circuit (30) comprises a capacitor (32) and two inductions (34 and 36), wherein a first end of the first induction (34), a first end of the second induction (36) and a first end of the capacitor (32) are interconnected, and
wherein a second end of the first induction (34) is connected with the voltage source (28), and a second end of the second induction (36) is connected with the output (14), and a second end of the capacitor (32) is connected with a reference voltage, such as mass (38).

26. A system according to any one of the preceding claims, wherein the system (1) is further provided with a transformer (52), wherein the transformer (52) is inserted between the antenna system (6) and the output (14) of the amplifier (8).

27. A system according to any one of the preceding claims, wherein the amplifier (8) is arranged for supplying an output current of substantially 1A to the output (14).

28. A system according to any one of the preceding claims, wherein the system (1) is further provided with at least one responder, wherein the at least one responder is arranged for receiving the first signal transmitted by the transmitter (2) and transmitting the second signal.

29. A method for adapting, for instance to environmental factors, an impedance of an antenna system of a system for communicating with at least one responder,
wherein the system (1) is provided with a transmitter (2) for transmitting at least a first signal with a predetermined transmission frequency and an antenna system (6), wherein the antenna system (6) is connected with the transmitter (2), wherein the transmitter (2) is provided with an amplifier (8) provided with an input (10) which is arranged for being connected with a signal source (12) and provided with an output (14) which is connected with the antenna system (6), and wherein the amplifier (8) is arranged such that, at least at the predetermined transmission frequency, the output (14) behaves like a current source (18), **characterized in that**
the antenna system (6) is provided with an LC circuit (20) which is arranged such that the impedance of the antenna system (6), at least at the predetermined transmission frequency, is substantially free of an imaginary component, wherein the LC circuit (20) comprises a series capacitor (26) which is connected in series with an antenna (22) of the antenna system (6), and wherein, at least at the predetermined transmission frequency, an imaginary component of an impedance of the series capacitor (26) is substantially equal to, and has an opposite sign to, an imaginary component of an impedance of the antenna (22), comprising
- varying the value of the series capacitor (26) during the transmission of a first signal, while an output voltage at the output (14) of the amplifier (8) is measured,
- Selecting the value of the series capacitor (26) at which the output voltage has the lowest value measured.

## Patentansprüche

1. System (1) zur Kommunikation mit mindestens einem Responder, wobei das System (1) mit einem Sender (2) zum Senden von mindestens einem ersten Signal mit einer vorbestimmten Sendefrequenz und einem Antennensystem (6) versehen ist, wobei das Antennensystem (6) mit dem Sender (2) verbunden ist,
wobei der Sender (2) mit einem Verstärker (8) versehen ist, der mit einem Eingang (10) versehen ist, der angeordnet ist, um mit einer Signalquelle (12) verbunden zu werden, und mit einem Ausgang (14) versehen ist, der mit dem Antennensystem (6) verbunden ist,
wobei der Verstärker (8) so angeordnet ist, dass, mindestens bei der vorbestimmten Übertragungsfrequenz, der Ausgang (14) sich wie eine Stromquelle (18) verhält, **dadurch gekennzeichnet, dass** das Antennensystem (6) so angeordnet ist, dass eine Impedanz des Antennensystems (6), mindestens bei der vorbestimmten Sendefrequenz, im Wesentlichen frei von einer imaginären Komponente ist.

2. System nach Anspruch 1, wobei das System (1) ferner mit einem Empfänger (4) zum Empfangen eines zweiten Signals von dem mindestens einen Responder versehen ist.

3. System nach Anspruch 2, wobei das Antennensystem (6) mit dem Empfänger (4) verbunden ist.

4. System nach einem der Ansprüche 2-3, wobei das System (1) angeordnet ist, um Vollduplex (FDX)-Signale zu senden und/oder zu empfangen.

5. System nach einem der Ansprüche 2-4, wobei das System (1) angeordnet ist, um abwechselnd Halbduplex (HDX)-Signale zu senden oder zu empfangen.

6. System nach einem der Ansprüche 2-5, wobei der Empfänger (4) einen Amplitudenmodulations (AM)-Empfänger umfasst.

7. System nach einem der Ansprüche 2-6, wobei der Empfänger (4) einen Empfänger mit Frequenzumtastung (engl. Frequency Shift Keying, FSK) umfasst.

8. System nach Anspruch 5, wobei das System (1) mit Dämpfungsmitteln (46) versehen ist, die ein- und ausgeschaltet werden können, um Ströme durch das Antennensystem (6) zu dämpfen.

9. System nach Anspruch 8, wobei das System (1) angeordnet ist, um während eines Zeitraums, in dem der Sender (2) das erste Signal nicht sendet und in dem der Empfänger (4) das zweite Signal empfängt, die Dämpfungsmittel (46) einzuschalten.

10. System nach Anspruch 8 oder 9, wobei das System (1) angeordnet ist, um während eines Zeitraums, in dem der Sender (2) das erste Signal sendet und in dem der Empfänger (4) das zweite Signal nicht empfängt, die Dämpfungsmittel (46) auszuschalten.

11. System nach Anspruch 10, wobei das System (1) angeordnet ist, um während eines Zeitraums, in dem der Sender (2) das erste Signal nicht sendet und bevor der Empfänger (4) das zweite Signal empfängt, die Dämpfungsmittel (46) einzuschalten.

12. System nach einem der Ansprüche 9-11, wobei die Dämpfungsmittel (46) einen Dämpfungswiderstand (48) umfassen, welcher Dämpfungswiderstand (48) mit einer Referenzspannung verbunden ist, wie etwa Masse (38).

13. System nach einem der vorhergehenden Ansprüche, wobei das Antennensystem (6) mit einem LC-Schaltkreis (20) versehen ist, der so angeordnet ist, dass die Impedanz des Antennensystems (6), mindestens bei der vorbestimmten Sendefrequenz, im Wesentlichen frei von der imaginären Komponente ist.

14. System nach Anspruch 13, wobei der LC-Schaltkreis (20) mit einer Antenne (22) versehen ist, die eine Induktion (24) des LC-Schaltkreises (20) bildet.

15. System nach Anspruch 13 oder 14, wobei der LC-Schaltkreis (20) einen Serienkondensator (26) umfasst, der in Serie mit der Antenne (22) verbunden ist, und wobei, mindestens bei der vorbestimmten Sendefrequenz, eine imaginäre Komponente einer Impedanz des Serienkondensators (26) im Wesentlichen gleich ist und ein entgegengesetztes Vorzeichen hat wie eine imaginäre Komponente einer Impedanz der Antenne (22).

16. System nach Anspruch 15, wobei der Serienkondensator (26) zwischen der Antenne (22) und dem Ausgang (14) des Verstärkers (8) eingesetzt ist.

17. System nach einem der Ansprüche 15 oder 16, wobei der Wert des Serienkondensators (26) so gewählt ist, dass, bei Verwendung, die Emission von Signalen mit einer Frequenz im Bereich von 0-1000 Hz von der Antenne (22) verhindert, zumindest verringert, wird.

18. System nach einem der vorhergehenden Ansprüche, wobei das System (1) ferner mit der Signalquelle (12) versehen ist, die ein Signalquellen-Ausgangssignal erzeugt, das dem Eingang (10) des Verstärkers (8) zugeführt wird, wobei der Verstärker (8) so angeordnet ist, dass ein Verstärkerausgangssignal des Verstärkers (8) im Wesentlichen ausschließlich eine Grundschwingung des Signalquellen-Ausgangssignals umfasst.

19. System nach Anspruch 18, wobei das Signalquellen-Ausgangssignal ein sinusförmiges Signal umfasst, das aus mindestens einem digitalen Signal zusammengesetzt ist.

20. System nach Anspruch 18 oder 19, wobei der Verstärker (8) mit einem passiven Tiefpassfilter (30) versehen ist.

21. System nach einem der Ansprüche 18-20, wobei, bei Verwendung, das Verstärkerausgangssignal frei von den zweiten bis sechsten Ober- und Unterwellen des Signalquellen-Ausgangssignals ist.

22. System nach einem der Ansprüche 18-21, wobei, bei Verwendung, das Signalquellen-Ausgangssignal frei von den zweiten bis sechsten Ober- und Unterwellen der Grundschwingung ist.

23. System nach einem der vorhergehenden Ansprüche, wobei der Verstärker (8) mit einer Verstärkerstufe (28), die sich, mindestens bei der vorbestimmten Sendefrequenz, wie eine Spannungsquelle verhält, und mit einem Spannung-zu-Strom-Umwandlungskreis (30) versehen ist.

24. System nach Anspruch 23, wobei der Verstärker (8) einen Klasse-D-Verstärker (40) umfasst.

25. System nach Anspruch 23 oder 24, wobei der Spannung-zu-Strom-Umwandlungskreis (30) einen Kondensator (32) und zwei Induktionen (34 und 36) umfasst, wobei ein erstes Ende der ersten Induktion (34), ein erstes Ende der zweiten Induktion (36) und ein erstes Ende des Kondensators (32) miteinander verbunden sind und
wobei ein zweites Ende der ersten Induktion (34) mit der Spannungsquelle (28) verbunden ist und ein zweites Ende der zweiten Induktion (36) mit dem Ausgang (14) verbunden ist und ein zweites Ende des Kondensators (32) mit einer Referenzspannung, wie etwa Masse (38), verbunden ist.

26. System nach einem der vorhergehenden Ansprüche, wobei das System (1) ferner mit einem Transformator (52) versehen ist, wobei der Transformator (52) zwischen dem Antennensystem (6) und dem Ausgang (14) des Verstärkers (8) eingesetzt ist.

27. System nach einem der vorhergehenden Ansprüche, wobei der Verstärker (8) angeordnet ist, um einen Ausgangsstrom von im Wesentlichen 1A dem Ausgang (14) zuzuführen.

28. System nach einem der vorhergehenden Ansprüche, wobei das System (1) ferner mit mindestens einem Responder versehen ist, wobei der mindestens eine Responder angeordnet ist, um ein erstes von dem Sender (2) gesendetes Signal zu empfangen und das zweite Signal zu senden.

29. Verfahren zum Anpassen einer Impedanz, beispielsweise an Umgebungsfaktoren, eines Antennensystems eines Systems zur Kommunikation mit mindestens einem Responder,
wobei das System (1) mit einem Sender (2), um mindestens ein erstes Signal mit einer vorbestimmten Sendefrequenz zu senden, und einem Antennensystem (6) versehen ist, wobei das Antennensystem (6) mit dem Sender (2) verbunden ist, wobei der Sender (2) mit einem Verstärker (8) versehen ist, der mit einem Eingang (10) versehen ist, der angeordnet ist, um mit einer Signalquelle (12) verbunden zu werden, und mit einem Ausgang (14) versehen ist, der mit dem Antennensystem (6) verbunden ist, und wobei der Verstärker (8) so angeordnet ist, dass, mindestens bei der vorbestimmten Sendefrequenz, der Ausgang (14) sich wie eine Stromquelle (18) verhält, **dadurch gekennzeichnet, dass**
das Antennensystem (6) mit einem LC-Schaltkreis (20) versehen ist, der so angeordnet ist, dass die Impedanz des Antennensystems (6), mindestens bei der vorbestimmten Sendefrequenz, im Wesentlichen frei von einer imaginären Komponente ist, wobei der LC-Schaltkreis (20) einen Serienkondensator (26) umfasst, der in Serie mit einer Antenne (22) des Antennensystems (6) verbunden ist, und wobei, mindestens bei der vorbestimmten Sendefrequenz, eine imaginäre Komponente einer Impedanz des Serienkondensators (26) im Wesentlichen gleich ist und ein entgegengesetztes Vorzeichen hat wie eine imaginäre Komponente einer Impedanz der Antenne (22), umfassend
- das Variieren des Wertes des Serienkondensators (26) während des Sendens eines ersten Signals, während eine Ausgangsspannung am Ausgang (14) des Verstärkers (8) gemessen wird,
- das Auswählen des Wertes des Serienkondensators (26), bei dem die Ausgangsspannung den niedrigsten gemessenen Wert hat.

## Revendications

1. Système (1) pour communiquer avec au moins un répondeur, dans lequel le système (1) est pourvu d'un émetteur (2) pour émettre au moins un premier signal avec une fréquence d'émission prédéterminée et d'un système d'antenne (6), dans lequel le système d'antenne (6) est connecté à l'émetteur (2),
dans lequel l'émetteur (2) est pourvu d'un amplificateur (8) pourvu d'une entrée (10) qui est agencée pour être connectée à une source de signal (12) et pourvu d'une sortie (14) qui est connectée au système d'antenne (6),
dans lequel l'amplificateur (8) est agencé de telle manière qu'au moins à la fréquence d'émission prédéterminée, la sortie (14) se comporte comme une source de courant (18), **caractérisé en ce que** le système d'antenne (6) est agencé de telle manière qu'une impédance du système d'antenne (6), au moins à la fréquence d'émission prédéterminée, est sensiblement sans composante imaginaire.

2. Système selon la revendication 1, dans lequel le système (1) est en outre pourvu d'un récepteur (4) pour recevoir un second signal depuis l'au moins un répondeur.

3. Système selon la revendication 2, dans lequel le système d'antenne (6) est connecté au récepteur (4).

4. Système selon l'une quelconque des revendications 2-3, dans lequel le système (1) est agencé pour émettre et/ou recevoir des signaux full-duplex (FDX).

5. Système selon l'une quelconque des revendications 2-4, dans lequel le système (1) est agencé pour émettre et recevoir alternativement des signaux half-duplex (HDX).

6. Système selon l'une quelconque des revendications 2-5, dans lequel le récepteur (4) comprend un récepteur à modulation d'amplitude (AM).

7. Système selon l'une quelconque des revendications 2-6, dans lequel le récepteur (4) comprend un récepteur à déplacement de fréquence (FSK).

8. Système selon la revendication 5, dans lequel le système (1) est pourvu de moyens d'amortissement (46) qui peuvent être allumés et éteints pour des courants d'amortissement à travers le système d'antenne (6).

9. Système selon la revendication 8, dans lequel le système (1) est agencé pour allumer les moyens d'amortissement (46) pendant une période dans laquelle l'émetteur (2) ne transmet pas le premier signal et dans laquelle le récepteur (4) reçoit le second signal.

10. Système selon la revendication 8 ou 9, dans lequel le système (1) est agencé pour éteindre les moyens d'amortissement (46) pendant une période dans laquelle l'émetteur (2) émet le premier signal et dans laquelle le récepteur (4) ne reçoit pas le second signal.

11. Système selon la revendication 10, dans lequel le système (1) est agencé pour allumer les moyens d'amortissement (46) pendant une période dans laquelle l'émetteur (2) n'émet pas le premier signal et avant que le récepteur (4) reçoive le second signal.

12. Système selon l'une quelconque des revendications 9-11, dans lequel les moyens d'amortissement (46) comprennent une résistance d'amortissement (48), laquelle résistance d'amortissement (48) est connectée à une tension de référence, comme une masse (38).

13. Système selon l'une quelconque des revendications précédentes, dans lequel le système d'antenne (6) est pourvu d'un circuit LC (20) qui est agencé de telle manière que l'impédance du système d'antenne (6), au moins à la fréquence d'émission prédéterminée, est sensiblement sans composante imaginaire.

14. Système selon la revendication 13, dans lequel le circuit LC (20) est pourvu d'une antenne (22) qui forme une induction (24) du circuit LC (20).

15. Système selon la revendication 13 ou 14, dans lequel le circuit LC (20) comprend un condensateur en série (26) qui est connecté en série avec l'antenne (22), et dans lequel au moins à la fréquence d'émission prédéterminée, une composante imaginaire d'une impédance du condensateur en série (26) est sensiblement égale à, et a un signe opposé à, une composante imaginaire d'une impédance de l'antenne (22).

16. Système selon la revendication 15, dans lequel le condensateur en série (26) est inséré entre l'antenne (22) et la sortie (14) de l'amplificateur (8).

17. Système selon l'une quelconque des revendications 15 ou 16, dans lequel la valeur du condensateur en série (26) est choisie de telle manière que, en utilisation, l'émission de signaux avec une fréquence dans la plage de 0-1000Hz est empêchée, au moins réduite, par l'antenne (22).

18. Système selon l'une quelconque des revendications précédentes, dans lequel le système (1) est en outre pourvu de la source de signal (12) qui génère un signal de sortie de source de signal qui est alimenté vers l'entrée (10) de l'amplificateur (8), dans lequel l'amplificateur (8) est agencé de telle manière qu'un signal de sortie d'amplificateur de l'amplificateur (8) comprend sensiblement exclusivement une fondamentale du signal de sortie de source de signal.

19. Système selon la revendication 18, dans lequel le signal de sortie de source de signal comprend un signal sinusoïdal composé d'au moins un signal numérique.

20. Système selon la revendication 18 ou 19, dans lequel l'amplificateur (8) est pourvu d'un filtre passe-bas passif (30).

21. Système selon l'une quelconque des revendications 18-20, dans lequel, en utilisation, le signal de sortie d'amplificateur est sans les seconde à sixième harmoniques du signal de sortie de source de signal.

22. Système selon l'une quelconque des revendications 18-21, dans lequel, en utilisation, le signal de sortie de source de signal est sans les seconde à sixième harmoniques de la fondamentale.

23. Système selon l'une quelconque des revendications précédentes, dans lequel l'amplificateur (8) est pourvu d'un étage amplificateur (28) qui se comporte, au moins à la fréquence d'émission prédéterminée, comme une source de tension et d'un circuit de conversion tension-vers-courant (30).

24. Système selon la revendication 23, dans lequel l'amplificateur (8) comprend un amplificateur de classe D (40).

25. Système selon la revendication 23 ou 24, dans lequel, dans lequel le circuit de conversion tension-vers-courant (30) comprend un condensateur (32) et deux inductions (34 et 36), dans lequel une première extrémité de la première induction (34), une première extrémité de la seconde induction (36) et une première extrémité du condensateur (32) sont interconnectées, et
dans lequel une seconde extrémité de la première induction (34) est connectée à la source de tension (28), et une seconde extrémité de la seconde induction (36) est connectée à la sortie (14), et une seconde extrémité du condensateur (32) est connectée à une tension de référence, comme une masse (38).

26. Système selon l'une quelconque des revendications précédentes, dans lequel le système (1) est en outre pourvu d'un transformateur (52), dans lequel le transformateur (52) est inséré entre le système d'antenne (6) et la sortie (14) de l'amplificateur (8).

27. Système selon l'une quelconque des revendications précédentes, dans lequel l'amplificateur (8) est agencé pour fournir un courant de sortie de sensiblement 1A à la sortie (14).

28. Système selon l'une quelconque des revendications précédentes, dans lequel le système (1) est en outre pourvu d'au moins un répondeur, dans lequel l'au moins un répondeur est agencé pour recevoir le premier signal émis par l'émetteur (2) et émettre le second signal.

29. Procédé pour adapter, par exemple à des facteurs environnementaux, une impédance d'un système d'antenne d'un système pour communiquer avec au moins un répondeur,
dans lequel le système (1) est pourvu d'un émetteur (2) pour émettre au moins un premier signal avec une fréquence d'émission prédéterminée et d'un système d'antenne (6), dans lequel le système d'antenne (6) est connecté à l'émetteur (2), dans lequel l'émetteur (2) est pourvu d'un amplificateur (8) pourvu d'une entrée (10) qui est agencée pour être connectée à une source de signal (12) et pourvu d'une sortie (14) qui est connectée au système d'antenne (6), et dans lequel l'amplificateur (8) est agencé de telle manière qu'au moins à la fréquence d'émission prédéterminée, la sortie (14) se comporte comme une source de courant (18), **caractérisé en ce que**
le système d'antenne (6) est pourvu d'un circuit LC (20) qui est agencé de telle manière que l'impédance du système d'antenne (6), au moins à la fréquence d'émission prédéterminée, est sensiblement sans composante imaginaire, dans lequel le lequel le circuit LC (20) comprend un condensateur en série (26) qui est connecté en série avec l'antenne (22) du système d'antenne (6), et dans lequel, au moins à la fréquence d'émission prédéterminée, une composante imaginaire d'une impédance du condensateur en série (26) est sensiblement égale à, et a un signe opposé à, une composante imaginaire d'une impédance de l'antenne (22), comprenant
de faire varier la valeur du condensateur en série (26) pendant l'émission d'un premier signal, alors qu'une tension à la sortie (14) de l'amplificateur (8) est mesurée,
de sélectionner la valeur du condensateur en série (26) à laquelle la tension de sortie a la valeur mesurée la plus basse.
